# EUROPÄISCHE PATENTSCHRIFT

(11) **EP 1 717 990 B1**
(45) Veröffentlichungstag und Bekanntmachung des Hinweises auf die Patenterteilung: **29.10.2008**
(21) Anmeldenummer: 05009359.0
(22) Anmeldetag: 28.04.2005
(51) Int. Cl.: H04L 12/26

(54) **Testgerät für ein Telekommunikationsnetzwerk und Verfahren zum Durchführen eines Tests an einem Telekommunikationsnetzwerk**
Test device for a telecommunications network and method to perform a test of a telecommunications network
Dispositif de test pour un réseau de télécommunications et méthode pour réaliser un test d'un réseau de télécommunications

(43) Veröffentlichungstag der Anmeldung: 02.11.2006
(73) Patentinhaber: Tektronix International Sales GmbH, 8212 Neuhausen (CH)
(72) Erfinder: Schönfeld, Christian, 12205 Berlin (DE)
(74) Vertreter: Schurack, Eduard F.

(56) Entgegenhaltungen:
- EP-A- 0 957 432
- WO-A-03/084134
- US-A1- 2005 081 111

## Beschreibung

Die vorliegende Erfindung betrifft ein Testgerät für ein Telekommunikationsnetzwerk sowie ein Verfahren zum Durchführen eines Tests an einem Telekommunikationsnetzwerk. Im Bereich von Last- und Systemtests von Telekommunikationsnetzwerken soll nach dem Ablauf eines Tests eine Aussage über den Erfolg bzw. Misserfolg getroffen werden. Dazu werden im Stand der Technik während jeden Testlaufs alle relevanten Informationen in einer sogenannten Logdatei in Form eines Protokolls gespeichert. Aus diesen Informationen lässt sich eine Aussage über den Erfolg bzw. Misserfolg des Tests ableiten. Diese Informationen müssen dazu von Hand gesichtet werden, was sich insbesondere dann, wenn während eines Testlaufs Probleme aufgetreten sind, als sehr zeitaufwändig - teilweise mehrere Stunden - gestalten kann. Im Fehlerfalle ist es für einen Mitarbeiter ohne genaueste Kenntnisse des eingesetzten Testgeräts unmöglich, die Ursache der Fehler zu ergründen. Die Lösung nach dem Stand der Technik ist daher nicht nur zeitintensiv, sondern auch wissensintensiv.

In diesem Zusammenhang wird auf die EP 0 957 432 A2 verwiesen, die ein Verfahren, System und Computerprogrammprodukt zum clientbasierten Monitoren einer von einem Server zur Verfügung gestellten Anwendung offenbart, wobei insbesondere die Reaktionszeit und die Verfügbarkeit des Anwendungsprogramms untersucht werden. Ein Testprogramm auf dem Clientcomputer erzeugt Anfragen für die Dienste des Anwendungsprogramms und zeichnet die resultierenden Transaktionen auf. Die Transaktionsaufzeichnungen werden in einem zentralen Speicher statistisch aufbereitet. Es werden Qualitätskriterien für das überwachte Anwendungsprogramm festgelegt und es wird festgestellt, ob diese Kriterien durch Testergebnisse überschritten wurden. Bei Verletzung eines dieser vordefinierten Kriterien wird ein Alarmsignal erzeugt, um das Servicepersonal auf das Vorliegen eines Fehlers aufmerksam zu machen. Die Testergebnisse können außerdem auf einer Anzeige dargestellt werden, wobei der Benutzer ausgehend von einer Übersichtsanzeige durch Anklicken ihn interessierender Elemente zu detaillierteren Darstellungen bis hin zu einem bestimmten Server zu einer bestimmten Tageszeit wechseln kann.

Die Aufgabe der vorliegenden Erfindung besteht darin, ein Testgerät für ein Telekommunikationsnetzwerk sowie ein Verfahren zum Durchführen eines Tests an einem Telekommunikationsnetzwerk bereitzustellen, bei denen eine Aussage über Erfolg bzw. Misserfolg eines Tests mit geringerem Aufwand an Zeit und Wissen ermöglicht wird.

Diese Aufgabe wird gelöst durch ein Testgerät mit den Merkmalen von Patentanspruch 1 und ein Verfahren mit den Merkmalen von Patentanspruch 14.

Die vorliegende Erfindung basiert auf der Erkenntnis, dass die obige Aufgabe gelöst werden kann, wenn für die Ermittlung einer Aussage über den Erfolg bzw. Misserfolg eines Testlaufs nicht mehr Protokolle herangezogen werden, sondern stattdessen eine Voranalyse unter Verwendung von Statistiken erfolgt, wobei die Statistiken Ergebnisse von testrelevanten Ereignissen betreffen. Diese können dann zu frei definierbaren Qualitätsvorschriften in Beziehung gesetzt werden, um daraus Aussagen über den Erfolg bzw. Misserfolg eines Testlaufs abzuleiten. Darauf können dann erweiterte Analysen, beispielsweise zur Ermittlung von Aussagen über Fehlerursachen, aufgesetzt werden. Die Erfindung ermöglicht durch die Erzeugung geeigneter Statistiken und durch die Definition geeigneter Qualitätsvorschriften eine deutliche Beschleunigung der Analyse der Testergebnisse, so dass in einer vorgegebenen Zeit ein Vielfaches der Anzahl an Tests durchgeführt werden kann wie im Stand der Technik, was in einer Erhöhung der Qualität des Telekommunikationsnetzwerks resultiert, oder wobei vorgegebene Tests in einem Bruchteil der Zeit durchgeführt werden können, die im Stand der Technik dafür benötigt würde, so dass erhebliche Kostensenkungen realisiert werden können.

Eine Qualitätsvorschrift kann beispielsweise festlegen, dass die Quote der erfolgreich aufgebauten Verbindungen mindestens 99,5 % betragen muss.

Dabei ist ein einzelnes Ereignis und/oder eine Statistik durch Nicht-Erfüllen einer Qualitätsvorschrift als Fehler definierbar. Dadurch können, wenn der Test in dem Testgerät durch eine Abfolge von Aktionen und/oder Reaktionen beschrieben ist, Qualitätsvorschriften vorgesehen werden, die bereits durch eine einmalige, nicht korrekte Ausführung einer Aktion und/oder Reaktion als verletzt gelten.

Die Erfindung zeichnet sich dadurch aus, dass mit einem Fehler verwandte Statistiken und/oder Ereignisse zur Anwahl auf der Anzeigeeinheit dargestellt sind. Diese Maßnahme beruht auf der Erkenntnis, dass einem Fehler, der durch ein Ereignis oder eine Statistik eines bestimmten Testparameters definiert ist, Ungereimtheiten desselben Testparameters oder eines anderen Testparameters vorausgehen, die häufig die eigentliche Fehlerursache darstellen, jedoch schwierig aufzufinden sind, da die für sie definierten Qualitätsvorschriften bisweilen noch erfüllt werden. Häufig verursachen nämlich zunächst geringe Abweichungen in der Folge größere Turbulenzen, wobei erst diese dann als Fehler registriert werden können. Durch die genannte Maßnahme wird einer Bedienperson ein Mittel an die Hand gegeben, schnell und einfach die wahren Ursachen von Fehlern aufzuspüren.

Die Verwandtschaft kann insbesondere in Folgendem bestehen: zur gleichen Zeit aufgezeichnet wie das den Fehler auslösende Ereignis des Testparameters; innerhalb eines vorgebbaren Zeitintervalls vor und/oder nach dem Zeitpunkt des Aufzeichnens des den Fehler auslösenden Ereignisses des Testparameters aufgezeichnete Ereignisse desselben Testparameters oder einer vorgebbaren Auswahl an Testparametern, insbesondere aller Testparameter; eine vorgebbare Auswahl an Testparametern, insbesondere alle Testparameter, die zum selben Anruf und/oder zum selben Netzwerkelement und/oder zum selben Subscriber gehören wie das Ereignis des den Fehler auslösenden Testparameters.

Bevorzugt sind die Statistiken und/ oder Ereignisse, insbesondere auch einzelne Ereignisse, gemäß einer Baumstruktur gruppiert und auf der Anzeigeeinheit, insbesondere zur Anwahl, anzeigbar. Überdies können Mittel vorgesehen sein, die Baumstruktur durch eine Bedienperson zu definieren. Damit kann eine Bedienperson die Baumstruktur derart anlegen, dass die sie im Hinblick auf den aktuellen Test interessierenden Elemente der Baumstruktur innerhalb übergeordneter Elemente zusammengefasst sind und damit besonders leicht ein Überblick über den Erfolg bzw. Misserfolg eines Tests geschaffen werden kann. Alternativ können bestimmte Baumstrukturen vorgegeben werden, um dadurch die Anforderungen an das Wissen der Bedienperson möglichst niedrig zu halten.

Besonders einfach ist das Auffinden eines Fehlers, wenn eine Statistik und/oder ein Ereignis, die/das bei einem Vergleich einen Fehler erzeugt, in den Elementen der übergeordneten Ebenen dieser Statistik und/oder dieses Ereignisses in der Baumstruktur, insbesondere bis in die zugehörigen Elemente der höchsten Ebene der Baumstruktur, entsprechend auf der Anzeigeeinheit markiert ist. Durch diese Maßnahme lässt sich zielgerichtet von der obersten Ebene aus eine Statistik und/oder ein Ereignis ermitteln, die/das bei einem Vergleich einen Fehler erzeugt hat (drill down approach). Unnötiges Überprüfen von Statistiken und/oder Ereignissen, die ordnungsgemäß, d.h. ohne Erzeugung eines Fehlers, erzeugt wurden, kann daher entfallen. Fehler lassen sich dadurch in einem Bruchteil der sonst üblichen Zeit aufspüren und analysieren.

Besonders vorteilhaft ist eine Ausführungsform, bei der die Elemente der Baumstruktur auf der Anzeigeeinheit angewählt werden können, um die dem angewählten Element untergeordneten Elemente zur Anwahl auf der Anzeigeeinheit anzuzeigen. Durch diese Maßnahme kann sich eine Bedienperson sukzessive der Statistik und/oder dem Ereignis, die/das bei einem Vergleich einen Fehler erzeugt hat, annähern.

Die untersten Elemente der Baumstruktur sind in vorteilhafter Weise demnach Dateien mit mindestens einer Statistik und/oder mindestens einem Ereignis, insbesondere solche, die einen Fehler verursacht haben. Damit wird einer Bedienperson ermöglicht, sich durch die Baumstruktur hindurchzutasten, bis schließlich zuletzt Informationen auf der Anzeigeeinheit zur Anzeige gebracht werden können, die der Bedienperson helfen, die Ursache eines Fehlers aufzufinden.

Bei einer bevorzugten Ausführungsform eines Testgeräts ist auf der Anzeigeeinheit ein Fenster vorgesehen, in dem weitere Angaben zu Fehlern, die sich während eines Tests ereignet haben, anzeigbar sind. Dadurch werden einer Bedienperson unmittelbar die sich bei dem Testlauf ergebenden Fehler auf der untersten Ebene der Baumstruktur angezeigt. Die Bedienperson erhält damit unmittelbar wichtige Informationen zu den sich beim gegenwärtigen Testlauf ergebenden Fehlern, kann Rückschlüsse daraus ziehen und entsprechende Maßnahmen zur Beseitigung der Fehler in kürzester Zeit initiieren.

Die weiteren Angaben zu den Fehlern können eine Auswahl aus Folgendem umfassen: Name des Fehlers, Typ des Fehlers, Häufigkeit des Auftretens des Fehlers, Zeitpunkt des Auftretens, zugehörige oder verwandte Statistik(en) und Ereignisse.

Bevorzugte Ausführungsformen zeichnen sich weiterhin durch einen Filter aus, in dem durch Spezifizierung der Angaben zu den Fehlern bewirkbar ist, dass nur diejenigen Fehler, die die Filtereinstellungen erfüllen, auf der Anzeigeeinheit angezeigt werden. Dies ermöglicht einer Bedienperson sich bei der Analyse auf die Fehler zu konzentrieren, die im Hinblick auf den aktuellen Testlauf, insbesondere im Hinblick auf gegenüber dem vorhergehenden Testlauf modifizierte Parameter, von besonderer Bedeutung sind.

Bevorzugt kann weiterhin vorgesehen werden, dass Angaben zu den Fehlern anwählbar sind und dadurch zugehörige Statistiken und/oder Ereignisse entsprechend der jeweiligen Angabe zu einem Fehler auf der Anzeigeeinheit anzeigbar sind. Diese Maßnahme erlaubt die schnelle Auffindung der einem oder mehreren Fehlern zugrunde liegenden Ursache.

Um die Übersichtlichkeit weiter zu erhöhen, kann vorgesehen werden, dass eine Qualitätsvorschrift mindestens zwei Testparameter umfasst. Mit anderen Worten können in einer Qualitätsvorschrift mehrere Testparameter durch einen Algorithmus verknüpft werden, so dass sich insgesamt die auf der Anzeigeeinheit dargestellten Ergebnisse eines Testlaufs weiter reduzieren lassen, so dass eine weitere Erhöhung der Übersichtlichkeit und damit eine weitere Zeitersparnis bei der Analyse der Testergebnisse erzielt werden kann.

Die im Zusammenhang mit dem erfindungsgemäßen Testgerät vorgestellten bevorzugten Ausführungsformen und die zugehörigen Vorteile gelten entsprechend für das erfindungsgemäße Verfahren.

Im Nachfolgenden werden nunmehr Ausführungsbeispiele der Erfindung unter Bezugnahme auf die beigefügten Zeichnungen näher beschrieben. Es zeigen:
- Figur 1: eine auf der Anzeigeeinheit eines erfindungsgemäßen Testgeräts angezeigte erste Benutzeroberfläche gemäß einer ersten Ausführungsform eines erfindungsgemäßen Testgeräts;
- Figur 2: eine auf der Anzeigeeinheit eines erfindungsgemäßen Testgeräts angezeigte zweite Benutzeroberfläche gemäß der ersten Ausführungsform eines erfindungsgemäßen Testgeräts;
- Figur 3: eine auf der Anzeigeeinheit eines erfindungsgemäßen Testgeräts angezeigte dritte Benutzeroberfläche gemäß der ersten Ausführungsform eines erfindungsgemäßen Testgeräts;
- Figur 4: eine auf der Anzeigeeinheit eines erfindungsgemäßen Testgeräts angezeigte erste Benutzeroberfläche gemäß einer zweiten Ausführungsform eines erfindungsgemäßen Testgeräts;
- Figur 5: eine auf der Anzeigeeinheit eines erfindungsgemäßen Testgeräts angezeigte zweite Benutzeroberfläche gemäß der zweiten Ausführungsform eines erfindungsgemäßen Testgeräts;
- Figur 6: eine auf der Anzeigeeinheit eines erfindungsgemäßen Testgeräts angezeigte dritte Benutzeroberfläche gemäß der zweiten Ausführungsform eines erfindungsgemäßen Testgeräts;
- Figur 7: eine auf der Anzeigeeinheit eines erfindungsgemäßen Testgeräts angezeigte vierte Benutzeroberfläche gemäß der zweiten Ausführungsform eines erfindungsgemäßen Testgeräts; und
- Figur 8: eine auf der Anzeigeeinheit eines erfindungsgemäßen Testgeräts angezeigte fünfte Benutzeroberfläche gemäß der zweiten Ausführungsform eines erfindungsgemäßen Testgeräts, über die von einem Benutzer eine Qualitätsvorschrift definiert werden kann.

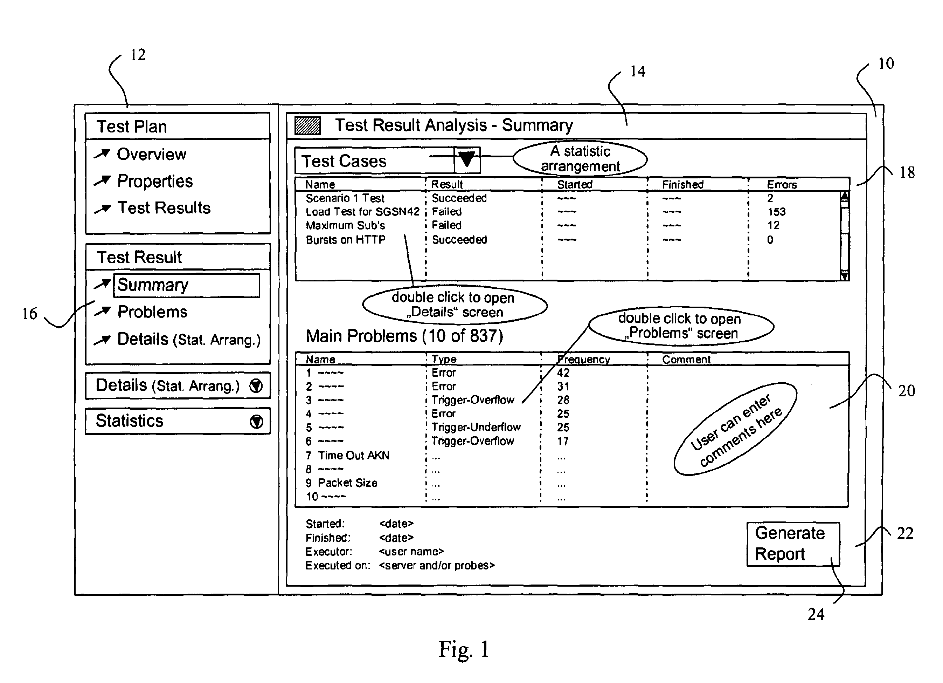

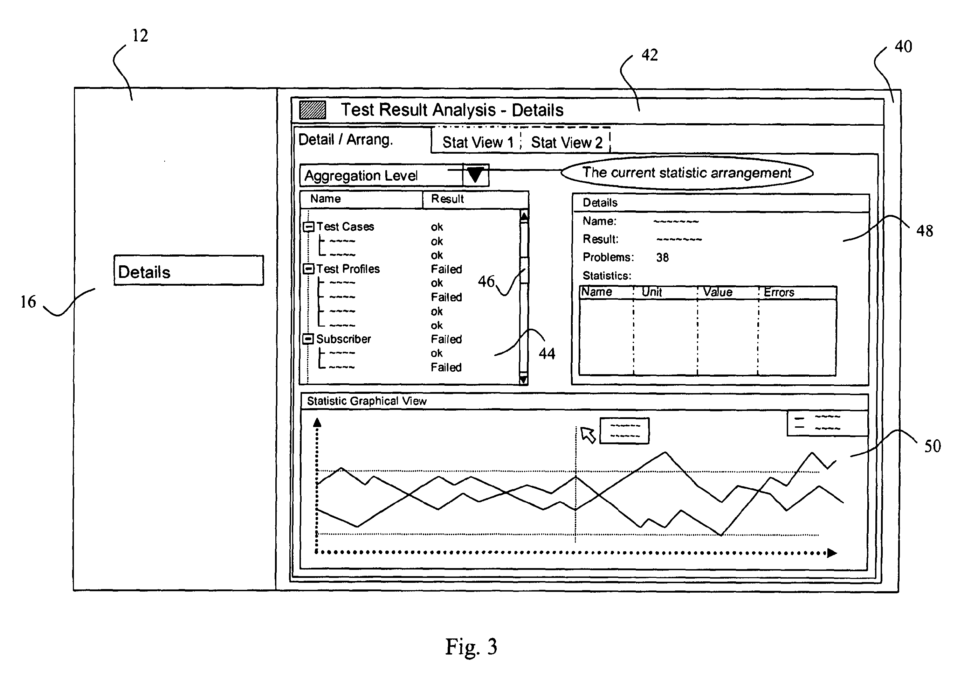

Figur 1 zeigt eine erste, auf einer Anzeigeeinheit, beispielsweise einem LCD-Bildschirm, eines erfindungsgemäßen Testgeräts dargestellte erste Benutzeroberfläche 10, die in einem ersten Fenster 12 einer Bedienperson Informationen bereitstellt über Aspekte eines Test, die dann detaillierter in einem zweiten Fenster 14 dargestellt werden können. Vorliegend kann die Bedienperson durch Anklicken am Fenster 12 auswählen unter den Begriffen Überblick (Overview), Eigenschaften (Properties) und Testergebnisse (Test Results). Vorliegend wurde Testergebnisse ausgewählt, so dass in einem Bereich 16 des Fensters 12 weitere Aspekte zur Auswahl angezeigt sind, die zu dem Aspekt Testergebnisse gehören, vorliegend Zusammenfassung (Summary), Probleme (Problems) und Details. Im dargestellten Beispiel wurde weiterhin der Begriff Zusammenfassung (Summary) aktiviert, so dass im Fenster 14 Angaben hierzu angezeigt werden. In einem oberen Bereich 18 des Fensters 14 sind die Testfälle (Test Cases) angegeben, aus denen der aktuelle Test zusammengesetzt ist, und zwar mit ihrem Namen, dem zugehörigen Ergebnis, zeitliche Angaben zum Start und zum Ende des jeweiligen Testfalls sowie die Anzahl der darin aufgetretenen Fehler. Im Hinblick auf von einer Bedienperson definierbare Qualitätsvorschriften wird der jeweilige Testfall in der Spalte Ergebnis (Result) als erfolgreich (Succeeded) oder als erfolglos (Failed) gekennzeichnet. Durch einen Doppelklick auf einen der Testfälle lässt sich die zugehörige Benutzeroberfläche mit den Details zur Anzeige bringen, siehe hierzu auch den Eintrag im Bereich 16 von Fenster 12 und der ausführlicheren Beschreibung weiter unten im Zusammenhang mit Figur 3.

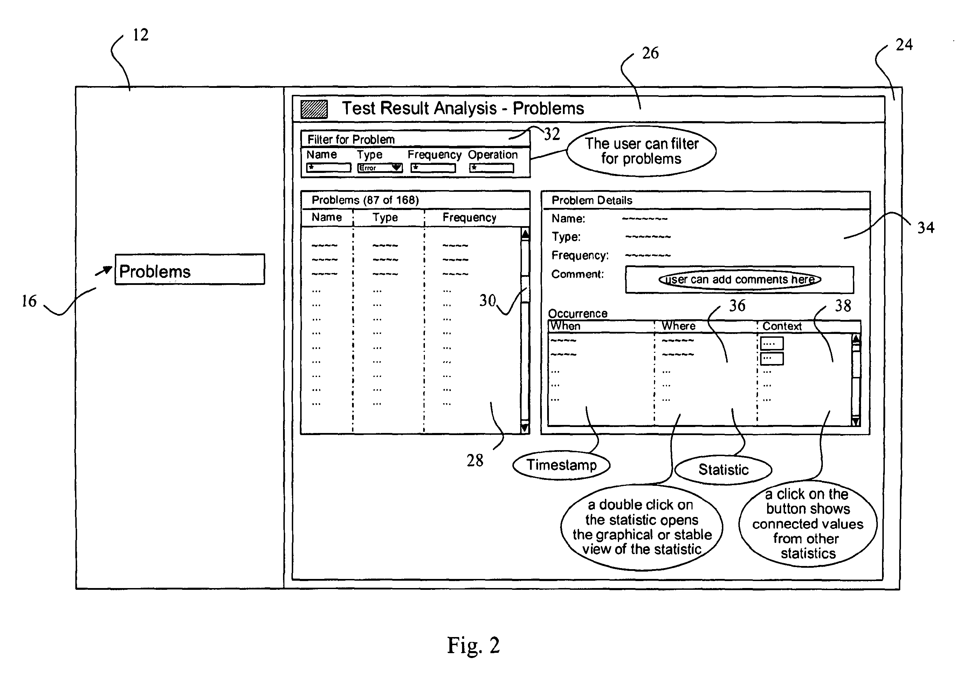

Im mittleren Bereich 20 des Fensters 14 sind die Fehler (Problems) angegeben und zwar mit ihrem Namen, mit dem Typ des Fehlers, mit ihrer Häufigkeit und der Möglichkeit der Eingabe von Kommentaren durch eine Bedienperson. Im Bereich 22 sind allgemeine Angaben zu dem aktuellen Test eintragbar, wie z. B. der Zeitpunkt des Starts sowie des Endes des Tests, der Name der ausführenden Person sowie Angaben zu dem oder den Element(en), an denen der Test ausgeführt wurde, d.h. der Testumgebung. Über ein Icon 24 kann die Erzeugung eines Berichts initiiert werden, der dann ausgedruckt werden kann. Durch Doppelklick auf einen Eintrag in dieser Tabelle wird die zugehörige Fehler-Benutzeroberfläche auf der Anzeigeeinheit zur Anzeige gebracht, auf die im Zusammenhang mit Figur 2 noch näher eingegangen werden wird.

Figur 2 zeigt eine Benutzeroberfläche 24, die sich ergibt, wenn im Fenster 12 im Bereich 16 der Aspekt Fehler (Problems) von einer Bedienperson angewählt wird. Die restlichen Angaben im Fenster 12 entsprechen denen von Figur 1 und wurden der Übersichtlichkeit halber weggelassen. Im Fenster 26 werden in einem Bereich 28 die Fehler angezeigt mit ihrem Namen, ihrem Typ sowie ihrer Häufigkeit. Über einen Scrollbalken 30 (vergleiche auch Bereich 18 von Figur 1) kann durch die Gesamtzahl der Fehler gescrollt werden. Über einen Bereich 32 kann eine Bedienperson einen Fehlerfilter definieren, so dass nur die Fehler angezeigt werden, die den Filterbedingungen genügen. Vorliegend können in dem Filter Angaben gemacht werden zum Namen, zum Typ, zur Häufigkeit sowie zur Verknüpfung (operation) dieser Angaben. Wird im Bereich 28 durch Anklicken ein bestimmter Fehler ausgewählt, werden im Bereich 34 Details zu diesem Fehler angezeigt, wie beispielsweise wann der Fehler aufgetreten ist, im Rahmen welcher Statistik sowie in welchem Kontext. Unter dem Begriff Statistik ist hierbei zu verstehen, dass während eines Tests eine Vielzahl von Zählungen von Ereignissen bestimmter Testparameter während der Durchführung eines Tests vorgenommen wird. Aus den Ergebnissen dieser Zählungen wird eine Vielzahl von Statistiken erstellt, wobei eine Bedienperson Qualitätsvorschriften in Abhängigkeit von Ergebnissen von Zählungen von Ereignissen für eine Vielzahl von Testparametern definieren kann. Durch Vergleichen zusammengehöriger Statistiken und Qualitätsvorschriften wird gefolgert, ob ein entsprechender Testparameter erfolgreich oder erfolglos den Test durchlaufen hat. Von Bedeutung ist, dass ein Fehler nicht nur definiert ist durch Nicht-Erfüllen einer Qualitätsvorschrift, die eine Vielzahl von Ereignissen betrifft, sondern, sofern vorgesehen, bereits durch das Nicht-Erfüllen eines einzelnen Ereignisses. Unter Kontext ist zu verstehen, dass bestimmte Statistiken und/oder Ereignisse miteinander verwandt sein können, wobei die Verwandtschaft beispielsweise darin bestehen kann, dass sie zur gleichen Zeit aufgezeichnet wurden wie das den Fehler auslösende Ereignis des Testparameters, dass sie innerhalb eines vorgebbaren Zeitintervalls vor und/oder nach dem Zeitpunkt des Aufzeichnens des den Fehler auslösenden Ereignisses des Parameters aufgezeichnet wurden und denselben Testparameter betreffen oder eine vorgebbaren Auswahl an Testparametern, insbesondere aller Testparameter, dass sie eine vorgebbare Auswahl an Testparametern, insbesondere alle Testparameter sind, die zum selben Anruf oder zum selben Netzwerkelement und/oder zum selben Subscriber gehören wie das Ereignis, des den Fehler auslösenden Testparameters.

Durch Doppelklicken auf ein Ereignis oder eine Statistik im Bereich 36 wird eine Benutzeroberfläche zur Anzeige gebracht, auf der eine grafische Ansicht oder eine Tabellenansicht des entsprechenden Ereignisses bzw. der entsprechenden Statistik dargestellt ist. Durch Doppelklicken auf einen Eintrag im Fenster 38 werden verwandte Ereignisse und/oder Statistiken in einer weiteren Benutzeroberfläche zur Anzeige gebracht.

Figur 3 zeigt eine weitere Benutzeroberfläche 40, die sich ergibt, wenn im Fenster 12 von Figur 1 im Bereich 16 der Eintrag Details durch Anklicken aktiviert wurde. Im Fenster 42 der Benutzeroberfläche 40 werden dadurch Details zu den Testergebnissen angezeigt. In einem Bereich 44 sind die Details zu dem vorliegenden Test gemäß einer Baumstruktur gruppiert und sortiert, wobei eine Bedienperson durch Anklicken der entsprechenden Einträge zu detaillierteren Angaben verzweigen kann bzw. durch Anklicken des Minuszeichens zu höheren Ebenen gehen kann. Mittels eines Scrollbalkens 46 kann wiederum ein anderer Ausschnitt im Bereich 44 zur Anzeige gebracht werden. Durch Anklicken eines Eintrags im Bereich 44 werden Details hierzu im Bereich 48 angezeigt, beispielsweise der Name eines Testfalls, das Ergebnis, die Anzahl der aufgetretenen Fehler sowie eine Tabelle mit Angaben zu den Ereignissen und/oder Statistiken, die zu diesem Testfall gehören. In einem Bereich 50 wird der zeitliche Verlauf der Ereignisse einer Statistik dargestellt.

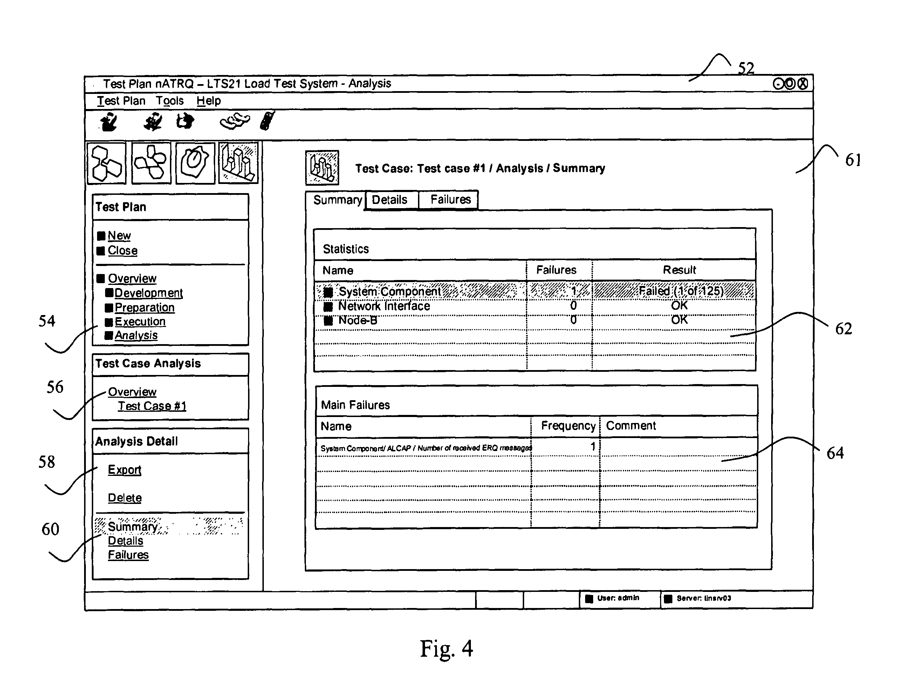

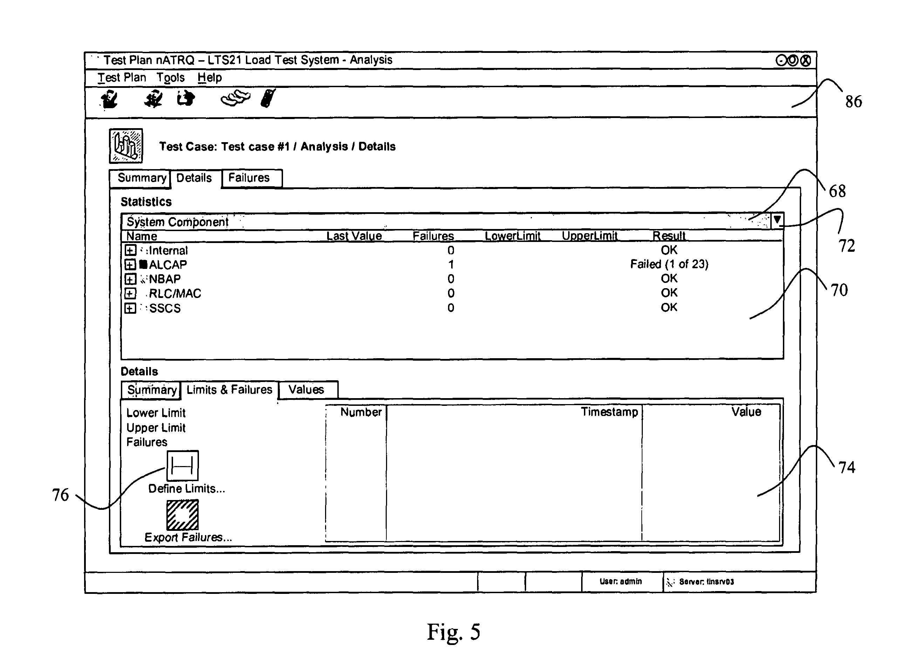

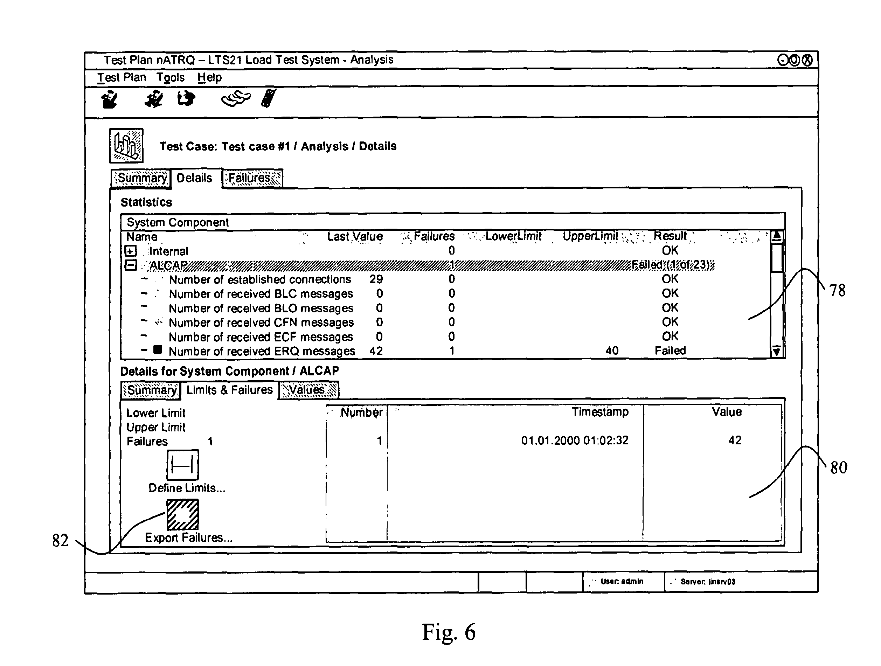

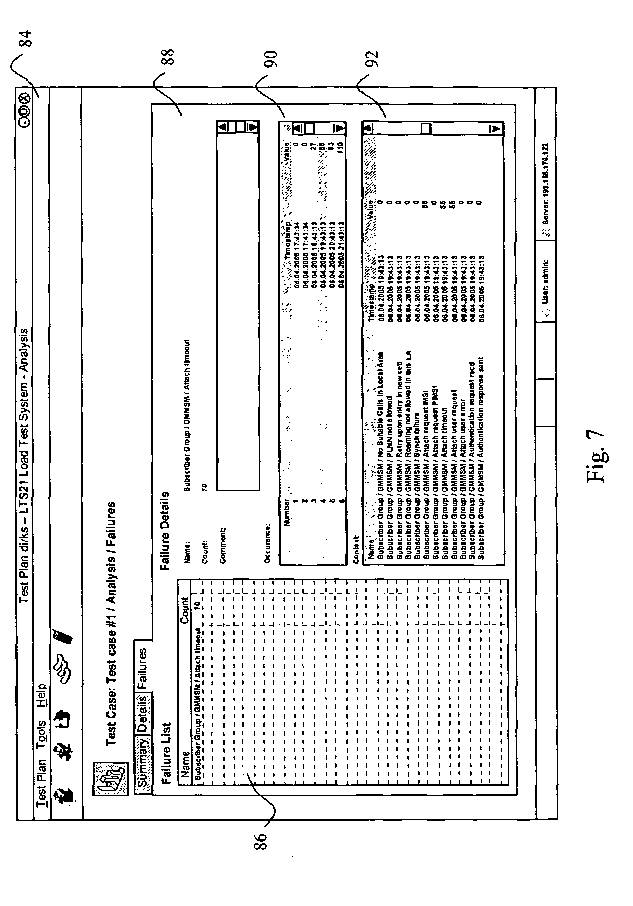

Während die Figuren 1 bis 3 eine erste Ausführungsform eines erfindungsgemäßen Testgeräts betreffen, betreffen die Figuren 4 bis 8 eine zweite Ausführungsform, wobei die Figur 4 mit der Figur 1 korrespondiert, die Figuren 5 und 6 mit der Figur 2 und die Figur 7 mit der Figur 3.

Figur 4 zeigt eine Benutzeroberfläche 52, bei der in einem Bereich 54 die Analyse angewählt wurde, in einem Bereich 56 in einem Überblick angegeben ist, dass vorliegender Test nur aus einem Testfall #1 besteht, in einem Bereich 58 Möglichkeiten zum Exportieren oder Löschen von Analysedetails bereitgestellt werden sowie in einem Bereich 60 drei Einträge zur Auswahl durch eine Bedienperson dargestellt sind, wobei vorliegend der Eintrag Summary, wie durch die farbliche Hinterlegung gekennzeichnet, ausgewählt wurde. Die beiden anderen Einträge führen zu den Benutzeroberflächen gemäß den Figuren 5 und 6 (Details) sowie der Benutzeroberfläche gemäß Figur 7 (Failures = Fehler). In einem Fenster 61 der Benutzeroberfläche 52 ist eine Zusammenfassung der Analyseergebnisse dargestellt. In dem oberen Bereich 62 sind die drei Elemente der höchsten Ebene einer Baumstruktur zu diesem Testfall dargestellt, wobei zwei Elemente (Network Interface und Node-B) grün dargestellt sind, d. h. dass diese Elemente den Test bestanden haben, wohingegen das Element "System Component" rot gekennzeichnet ist, um eine Bedienperson darauf hinzuweisen, dass sich bei diesem Element ein Fehler ereignet hat. Die zweite Spalte der Tabelle im Bereich 62 gibt die Anzahl der Fehler an und die dritte Spalte, ob der Test des entsprechenden Elements als Bestanden oder als Nicht-Bestanden gilt. In einem Bereich 64 sind die Hauptfehler und ihre Häufigkeit dargestellt. Die Möglichkeit der Eingabe von Kommentaren ist vorgesehen.

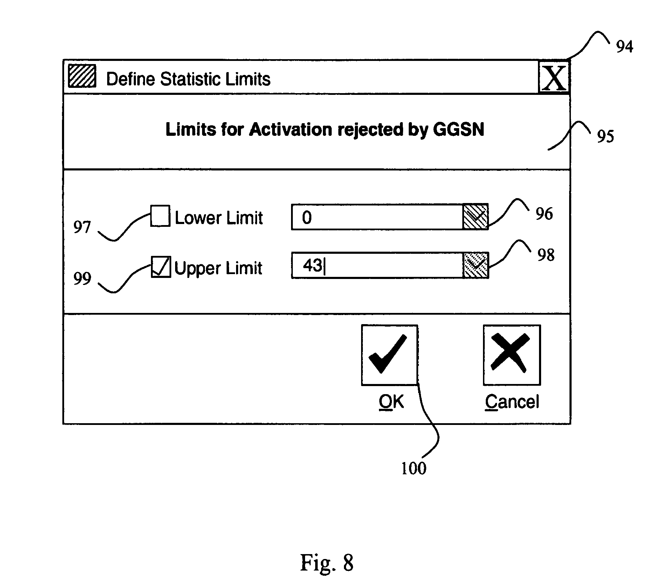

Figur 5 zeigt eine erste Benutzeroberfläche 66, die sich einstellt, wenn in der Benutzeroberfläche 52 von Figur 4 im Bereich 60 der Begriff "Details" angewählt wird. Wie durch den Eintrag in der Zeile 68 angegeben, sind im Bereich 70 die Elemente der Baumstruktur dargestellt, die unterhalb des Elements "System Component" liegen. Durch Anklicken des Pfeils 72 können in der Zeile 68 die anderen Elemente aus dem Fenster 62 von Figur 4 ausgewählt werden. Auch auf dieser Ebene ist farblich gekennzeichnet, bei welchem Element bzw. welchen Elementen sich Fehler ergeben haben. Vorliegend ist der Eintrag "ALCAP" durch ein rotes Symbol als fehlerbehaftet gekennzeichnet, während die anderen vier Einträge durch ein grünes Symbol zum Ausdruck bringen, dass sie fehlerfrei absolviert wurden. Die Tabelle im Bereich 70 gibt wiederum die Anzahl der Fehler an, stellt die Möglichkeit, sofern Qualitätsvorschriften zu einem bestimmten Testparameter definierbar sind und definiert wurden, die Anzeige der zugehörigen Untergrenze und/oder der zugehörigen Obergrenze bereit. Ein Anwählen des Icons 76 ermöglicht die Definition von Qualitätsvorschriften, siehe hierzu auch die Ausführungen weiter unten mit Bezug auf Fig. 8.

Figur 6 zeigt weitere Details der Baumstruktur im Bereich 78, die zu dem als fehlerhaft gekennzeichneten Eintrag "ALCAP" gehören. Vorliegend ist der Eintrag "Number of received ERQ messages" durch ein rotes Symbol als fehlerhaft gekennzeichnet. Wie aus dem Eintrag in der Spalte Upper Limit einfach zu erkennen ist, beträgt die Obergrenze 40 Ereignisse, während vorliegend 42 Ereignisse aufgetreten sind. Im Fenster 80 sind Angaben zu dem zugehörigen Fehler aus dem Bereich 78 dargestellt und können durch Anklicken des Icons 82 exportiert werden.

Figur 7 zeigt eine Benutzeroberfläche 84, die sich ergibt, wenn im Bereich 60 der Benutzeroberfläche 52 von Figur 4 der Bereich Failures (Fehler) angewählt wird. Im Bereich 86 der Benutzeroberfläche 84 ist eine Tabelle angegeben, in der die aufgetretenen Fehler mit ihrem Namen sowie der zugehörigen Zählung angegeben sind. Im Bereich 88 sind Details zu dem im Bereich 86 durch Anklicken ausgewählten Fehler dargestellt, vorliegend neben dem Namen und der Zählung im Bereich 90 Angaben zum Auftreten, insbesondere Zeit und Wert, und im Bereich 92 Angaben zu verwandten Ereignissen und/oder Statistiken, vorliegend ebenfalls mit Angabe zur Zeit des Auftretens sowie dem zugehörigen Wert. Durch Anklicken von Einträgen im Bereich 92 lassen sich weitere Details zu den dort zu sehenden Einträgen auf der Anzeigeeinheit zur Anzeige bringen.

Figur 8 schließlich zeigt eine Benutzeroberfläche 78, die nach Klicken auf den Icon 76 von Figur 5 und Anzeige einer Liste von Ereignissen oder Statistiken, aus denen eine Bedienperson auswählen kann, nach Auswahl eines entsprechenden Eintrags auf der Anzeigeeinheit angezeigt wird, und ein Feld 80, in dem die ausgewählte Statistik bzw. das ausgewählte Ereignis benannt ist, vorliegend die bei einem GGSN missglückte Verbindungsaufnahme (Activiation rejected by GGSN), wobei in einem Bereich 82 nach Aktivierung eines Icons 84 die untere Grenze angegeben werden kann und in einem Bereich 86 nach Anklicken eines Icons 88 die obere Grenze. Nach erfolgter Eintragung kann diese durch Anklicken des Icons 90 in dem System erfasst werden.

Nach alledem stellt demnach die vorliegende Erfindung ein Testgerät bereit, bei dem während eines Tests Statistiken betreffend Ereignisse für eine Vielzahl von Testparametern erstellt werden. Eine Bedienperson kann Qualitätsvorschriften definieren, insbesondere Schwellwerte angeben, wobei die zugehörige Statistik als fehlerhaft definiert wird, wenn dieser Schwellwert überschritten wird. Ebenso wie Statistiken können einzelne Ereignisse bei nicht korrekter Ausführung als Fehler definiert werden. Bei einer bevorzugten Ausführungsform können mehr als 200 Statistiken aufgezeichnet werden, was einer Datenmenge von 80 Gigabyte pro Tag entspricht. Statistiken können in einer Baumstruktur gruppiert werden, wobei die Baumstruktur vordefiniert oder benutzerdefiniert sein kann. Ein Element der Baumstruktur erhält sein Ergebnis, d. h. seine Beurteilung, ob es erfolgreich oder erfolglos absolviert wurde, aufgrund der Statistiken und Ereignisse, die in ihm enthalten sind.

Beim erfindungsgemäßen Testgerät ist ein so genannter "Drill down approach" umgesetzt, bei dem eine Bedienperson bevorzugt mit der Zusammenfassungs- (Summary)-Benutzeroberfläche beginnt und die Fehler innerhalb der Baumstruktur nach unten weiterverfolgt, bis sie die Statistik oder das Ereignis gefunden hat, das den Fehler hervorgerufen hat. Es ist die Möglichkeit bereitgestellt, Details zu der Statistik oder dem Ereignis, das den Fehler hervorgerufen hat, anzuzeigen und insbesondere Statistiken und Ereignisse, die mit der/dem den Fehler verursachenden Statistik/Ereignis verwandt sind, d. h. in einem Kontext stehen.

In der Zusammenfassungs-(Summary)-Benutzeroberfläche sind insbesondere Testablaufinformationen angezeigt, wie beispielsweise der Zeitpunkt des Starts und des Endes des Tests, die Bedienperson, die den Test gestartet hat, die Testumgebung, eine Zusammenfassung der Ergebnisse mit Beurteilung, ob der jeweilige Testfall erfolgreich oder erfolglos war, sowie eine Angabe der Fehler des jeweiligen Testfalls, und schließlich eine Übersicht über die Hauptfehler, wobei die Hauptfehler mit Namen, Typ, d. h. Schwellwertüberschreitung oder einmaliges nicht korrekt ausgeführtes Ereignis, sowie Häufigkeit angegeben sind.

Auf der Fehler-Benutzeroberfläche wird eine Liste der Fehler angezeigt, die Möglichkeit bereitgestellt auf bestimmte Fehler zu filtern sowie weitere Angaben zu den Fehlern gegeben, wie Name, Typ, Häufigkeit. In einem Bereich der Fehler-Benutzeroberfläche werden Details zu dem ausgewählten Fehler angezeigt, d. h. neben dem Namen, dem Typ und der Häufigkeit, Informationen zu seinem Auftauchen, d. h. wann, wo, d. h. in welcher Statistik, sowie Angaben zum Kontext, d. h. die Angabe, wie oben bereits dargestellt, verwandter Werte, die mit dem Fehler was zu tun haben könnten.

In einer weiteren Benutzeroberfläche mit Details der Analyse können über die Baumstruktur die Elemente des Tests ausgewählt werden, zu denen weitere Details angezeigt werden sollen. Zu jedem Element der Baumstruktur wird überdies das zugehörige Ergebnis angegeben, d. h. ob es erfolgreich oder erfolglos absolviert wurde. In einem weiteren Bereich der Benutzeroberfläche werden Details zu dem angewählten Element der Baumstruktur angegeben, wie der Name, das Ergebnis, die Anzahl von Fehlern, gegebenenfalls eine Liste der Fehler, und die Statistiken und Ereignisse, die erfolglos abgeschlossen wurden und dem angewählten Element der Baumstruktur untergeordnet sind. Überdies können ausgewählte Statistiken grafisch oder in Form einer Tabelle angezeigt werden.

## Patentansprüche

1. Testgerät für ein Telekommunikationsnetzwerk mit
- Mitteln (82, 84, 86, 88) zum Festlegen einer Vielzahl von Qualitätsvorschriften in Abhängigkeit von Ergebnissen von Zählungen von Ereignissen für eine Vielzahl von Testparametern;
- Mitteln zum Durchführen von Zählungen von Ereignissen betreffend die Vielzahl der Testparameter während der Durchführung eines Tests;
- Mitteln zum Erstellen einer Vielzahl von Statistiken aus den Ergebnissen der Zählungen;
- Mitteln zum Vergleichen zusammengehöriger Statistiken und Qualitätsvorschriften aus der Vielzahl von Statistiken und Qualitätsvorschriften, wobei ein Ereignis und/oder eine Statistik durch Nichterfüllen einer Qualitätsvorschrift als Fehler definiert ist;
- Mitteln zum Erzeugen einer Anzeige auf einer Anzeigeeinheit;
**dadurch gekennzeichnet,**
**dass** die Anzeige auf der Anzeigeeinheit entsprechend den Ergebnissen der Vergleiche erfolgt und
mit einem Fehler verwandte Statistiken und/oder Ereignisse zur Anwahl auf der Anzeigeeinheit dargestellt sind.

2. Testgerät nach Anspruch 1,
**dadurch gekennzeichnet,**
**dass** in dem Testgerät der Test durch eine Abfolge von Aktionen und/oder Reaktionen beschrieben ist und eine Qualitätsvorschrift durch eine einmalige, nicht korrekte Ausführung einer Aktion und/oder Reaktion als verletzt definierbar ist.

3. Testgerät nach einem der Ansprüche 1 oder 2,
**dadurch gekennzeichnet,**
**dass** die Verwandtschaft in Folgendem besteht:
- zur gleichen Zeit aufgezeichnet wie das den Fehler auslösende Ereignis des Testparameters;
- innerhalb eines vorgebbaren Zeitintervalls vor und/oder nach dem Zeitpunkt des Aufzeichnens des den Fehler auslösenden Ereignisses des Testparameters aufgezeichnete Ereignisse desselben Testparameters oder einer vorgebbaren Auswahl an Testparametem, insbesondere aller Testparameter;
- eine vorgebbare Auswahl an Testparametem, insbesondere alle Testparameter, die zum selben Anruf und/oder zum selben Netzwerkelement und/oder zum selben Subscriber gehören wie das Ereignis des den Fehler auslösenden Testparameters.

4. Testgerät nach einem der vorhergehenden Ansprüche,
**dadurch gekennzeichnet,**
**dass** die Statistiken und/oder Ereignisse, insbesondere auch einzelne Ereignisse, gemäß einer Baumstruktur gruppiert und auf der Anzeigeeinheit, insbesondere zur Anwahl, anzeigbar sind.

5. Testgerät nach Anspruch 4,
**dadurch gekennzeichnet,**
**dass** Mittel vorgesehen sind, die Baumstruktur durch eine Bedienperson zu definieren.

6. Testgerät nach einem der Ansprüche 4 oder 5,
**dadurch gekennzeichnet,**
**dass** eine Statistik und/oder ein Ereignis, die/das bei einem Vergleich einen Fehler erzeugt, in den übergeordneten Ebenen dieser Statistik in der Baumstruktur, insbesondere bis in die zugehörigen Elemente der höchsten Ebene der Baumstruktur, entsprechend auf der Anzeigeeinheit markiert ist.

7. Testgerät nach einem der Ansprüche 4 bis 6,
**dadurch gekennzeichnet,**
**dass** die Elemente der Baumstruktur auf der Anzeigeeinheit angewählt werden können, um die dem angewählten Element untergeordneten Elemente zur Anwahl auf der Anzeigeeinheit anzuzeigen.

8. Testgerät nach einem der Ansprüche 4 bis 7,
**dadurch gekennzeichnet,**
**dass** die untersten Elemente der Baumstruktur Dateien mit mindestens einer Statistik und/oder mindestens einem Ereignis sind, insbesondere solche, die einen Fehler verursacht haben.

9. Testgerät nach einem der vorhergehenden Ansprüche,
**dadurch gekennzeichnet,**
**dass** auf der Anzeigeeinheit ein Fenster (34, 88) vorgesehen ist, in dem Angaben zu Fehlern, die sich während eines Tests ereignet haben, anzeigbar sind.

10. Testgerät nach Anspruch 9,
**dadurch gekennzeichnet,**
**dass** die Angaben zu den Fehlern eine Auswahl aus folgenden umfassen: Name des Fehlers, Typ des Fehlers, Häufigkeit des Auftretens des Fehlers, Zeitpunkt des Auftretens, zugehörige und/oder verwandte Statistik (en) und Ereignisse.

11. Testgerät nach Anspruch 10,
**dadurch gekennzeichnet,**
**dass** sie weiterhin einen Filter umfasst, in dem durch Spezifizierung der Angaben zu den Fehlern bewirkbar ist, dass nur diejenigen Fehler, die die Filtereinstellungen erfüllen, auf der Anzeigeeinheit angezeigt werden.

12. Testgerät nach einem der Ansprüche 10 oder 11,
**dadurch gekennzeichnet,**
**dass** die Angaben zu den Fehlern anwählbar sind und dadurch zugehörige Statistiken und/oder Ereignisse entsprechend der jeweiligen Angabe zu einem Fehler auf der Anzeigeeinheit anzeigbar sind.

13. Testgerät nach einem der vorhergehenden Ansprüche,
**dadurch gekennzeichnet,**
**dass** eine Qualitätsvorschrift mindestens zwei Testparameter umfasst.

14. Verfahren zum Durchführen eines Tests an einem Telekommunikationsnetzwerk, folgende Schritte umfassend:
- Festlegen einer Vielzahl von Qualitätsvorschriften in Abhängigkeit von Ergebnissen von Zählungen von Ereignissen für eine Vielzahl von Testparametern;
- Durchführen von Zählungen von Ereignissen betreffend die Vielzahl der Testparameter während der Durchführung eines Tests;
- Erstellen einer Vielzahl von Statistiken aus den Ergebnissen der Zählungen;
- Vergleichen zusammengehöriger Statistiken und Qualitätsvorschriften aus der Vielzahl von Statistiken und Qualitätsvorschriften, wobei ein Ereignis und/oder eine Statistik durch Nichterfüllen einer Qualitätsvorschrift als Fehler definiert ist;
- Erzeugen einer Anzeige auf einer Anzeigeeinheit;
**dadurch gekennzeichnet,**
**dass** die Anzeige auf der Anzeigeeinheit entsprechend den Ergebnissen der Vergleiche erfolgt und
mit einem Fehler verwandte Statistiken und/oder Ereignisse zur Anwahl auf der Anzeigeeinheit dargestellt sind.

## Claims

1. Test apparatus for a telecommunication network having
- means (82, 84, 86, 88) for specifying a plurality of quality rules as a function of results of counts of events for a plurality of test parameters;
- means for executing counts of events relating to the plurality of test parameters during the performance of a test;
- means for creating a plurality of statistics from the results of the counts;
- means for comparing statistics and quality rules belonging together from the plurality of statistics and quality rules, wherein an event and/or a statistic is defined as an error by non-satisfying a quality rule;
- means for generating a display on a display unit;
**characterized in that**
the display is effected on the display unit according to the results of the comparisons, and
statistics and/or events related to an error are represented on the display unit for selection.

2. Test apparatus according to claim 1,
**characterised in that**
in the test apparatus the test is described by a sequence of actions and/or reactions, and a quality rule is definable as having been violated by one single incorrect execution of an action and/or reaction.

3. Test apparatus according to any one of claims 1 or 2,
**characterised in that**
the relatedness consists in the following:
- recorded at the same time as the test parameter event triggering the error;
- events of the same test parameter or of a specifiable selection of test parameters, particularly all test parameters, recorded within a specifiable time interval before and/or after the time of the recording of the test parameter event triggering the error;
- a specifiable selection of test parameters, particularly all test parameters, which belong to the same call and/or to the same network element and/or to the same subscriber as the event of the test parameter triggering the error.

4. Test apparatus according to any one of the preceding claims,
**characterized in that**
the statistics and/or events, especially also individual events, are grouped according to a tree structure and are displayable on the display unit, especially for selection.

5. Test apparatus according to claim 4,
**characterized in that**
means are provided to define the tree structure by an operator.

6. Test apparatus according to any one of claims 4 or 5,
**characterized in that**
a statistic and/or an event generating an error upon comparison is correspondingly marked on the display unit in the higher levels of this statistic in the tree structure, especially up to the associated elements of the highest level of the tree structure.

7. Test apparatus according to any one of claims 4 to 6,
**characterized in that**
the elements of the tree structure can be selected on the display unit to display the elements subordinate to the selected element on the display unit for selection.

8. Test apparatus according to any one of claims 4 to 7,
**characterized in that**
the lowest elements of the tree structure are files with at least one statistic and/or at least one event, especially those having caused an error.

9. Test apparatus according to any one of the preceding claims,
**characterized in that**
on the display unit there is provided a window (34, 88) in which there is displayable information on errors that have occurred during a test.

10. Test apparatus according to claim 9,
**characterized in that**
the information on the errors comprise a selection of the following: name of error, type of error, frequency of the occurrence of the error, time of the occurrence, associated or related statistic(s) and events.

11. Test apparatus according to claim 10,
**characterized in that**
it furthermore comprises a filter, in which there is effectable by specification of the information on the errors that only those errors that fulfil the filter settings are displayed on the display unit.

12. Test apparatus according to any one of claims 10 or 11,
**characterized in that**
the information on the errors is selectable and thereby associated statistics and/or events are displayable on the display unit in accordance with the respective information on an error.

13. Test apparatus according to any one of the preceding claims,
**characterized in that**
a quality rule comprises at least two test parameters.

14. Method for performing a test on a telecommunication network, comprising the following steps:
- defining a plurality of quality rules as a function of results of counts of events for a plurality of test parameters;
- performing counts of events relating to said plurality of test parameters during the performance of a test;
- creating a plurality of statistics from the results of the counts;
- comparing statistics and quality rules, which belong together, from said plurality of statistics and quality rules, wherein an event and/or a statistic is defined as an error by non-satisfying a quality rule;
- generating a display on a display unit;
**characterized in that**
the display is effected on the display unit according to the results of the comparisons, and
statistics and/or events related to an error are represented on the display unit for selection.

## Revendications

1. Appareil d'essai pour un réseau de télécommunications, avec
- des moyens (82, 84, 86, 88), destinés à définir une multiplicité de consignes de qualité en fonction de résultats de comptages d'événements pour une multiplicité de paramètres d'essai ;
- des moyens, destinés à effectuer des comptages d'événements concernant la multiplicité des paramètres d'essai pendant l'exécution d'un essai ;
- des moyens, destinés à établir une multiplicité de statistiques à partir des résultats des comptages ;
- des moyens, destinés à comparer des statistiques et des consignes de qualité correspondantes à partir de la multiplicité de statistiques et de consignes de qualité, un événement et/ou une statistique étant défini(e) par le biais de la non-satisfaction d'une consigne de qualité à titre d'erreur ;
- des moyens, destinés à générer un affichage sur une unité d'affichage ;
**caractérisé en ce que**
l'affichage s'opère sur l'unité d'affichage, conformément aux résultats des comparaisons et que
les statistiques et/ou les événements, apparenté(e)s à une erreur, sont représenté(e)s sur l'unité d'affichage, aux fins de sélection.

2. Appareil d'essai suivant la revendication 1,
**caractérisé en ce que**
dans l'appareil d'essai, l'essai est décrit par le biais d'une suite d'actions et/ou de réactions et qu'une consigne de qualité peut être définie comme violée par une exécution unique, non correcte, d'une action et/ou d'une réaction.

3. Appareil d'essai suivant l'une des revendications 1 ou 2,
**caractérisé en ce que**
le caractère apparenté consiste en ce qui suit :
- enregistré en même temps que l'événement, qui déclenche l'erreur, du paramètre d'essai ;
- des événements du même paramètre d'essai ou d'une sélection paramétrable de paramètres d'essai, en particulier de tous les paramètres d'essai, enregistrés dans les limites d'une période de temps paramétrable avant et/ou après le moment de l'enregistrement de l'événement, qui déclenche l'erreur, du paramètre d'essai ;
- une sélection paramétrable de paramètres d'essai, en particulier de tous les paramètres d'essai qui font parti du même appel et/ou du même élément de réseau et/ou du même abonné que l'événement du paramètre d'essai qui déclenche l'erreur.

4. Appareil d'essai suivant l'une des revendications précédentes,
**caractérisé en ce que**
les statistiques et/ou les événements, en particulier aussi les événements isolés, sont groupé(e)s conformément à une structure arborescente et sont affichables sur l'unité d'affichage, en particulier aux fins de sélection.

5. Appareil d'essai suivant la revendication 4,
**caractérisé en ce que**
des moyens sont prévus pour définir la structure arborescente par le biais d'un opérateur.

6. Appareil suivant l'une des revendications 4 ou 5,
**caractérisé en ce**
**qu'**une statistique et/ou un événement, qui génère une erreur lors d'une comparaison, est marqué(e) en conséquence sur l'unité d'affichage, dans les niveaux supérieurs de cette statistique dans la structure arborescente, en particulier jusque dans les éléments associés du niveau le plus élevé de la structure arborescente.

7. Appareil d'essai suivant l'une des revendications 4 à 6,
**caractérisé en ce que**
les éléments de la structure arborescente peuvent être sélectionnés sur l'unité d'affichage, pour afficher les éléments, subordonnés à l'élément sélectionné, aux fins de sélection sur l'unité d'affichage.

8. Appareil d'essai suivant l'une des revendications 4 à 7,
**caractérisé en ce que**
les éléments les plus inférieurs de la structure arborescente sont des fichiers avec au moins une statistique et/ou au moins un événement, en particulier ceux qui ont provoqué une erreur.

9. Appareil d'essai suivant l'une des revendications précédentes,
**caractérisé en ce**
**qu'**une fenêtre (34, 88) est prévue, dans laquelle des indications relatives aux erreurs, qui se sont produites pendant un essai, peuvent être affichées sur l'unité d'affichage.

10. Appareil d'essai suivant la revendication 9,
**caractérisé en ce que**
les indications relatives aux erreurs comprennent une sélection parmi les éléments suivants : nom de l'erreur, type de l'erreur, fréquence de survenue de l'erreur, moment de la survenue, statistique(s) et événements, associé(e)s et/ou apparenté(e)s.

11. Appareil d'essai suivant la revendication 10,
**caractérisé en ce**
**qu'**il comprend en outre un filtre, dans lequel il peut être fait en sorte que, par spécification des indications relatives aux erreurs, seules les erreurs, qui satisfont les réglages du filtre, soient affichées sur l'unité d'affichage.

12. Appareil d'essai suivant l'une des revendications 10 ou 11,
**caractérisé en ce que**
les indications relatives aux erreurs peuvent être sélectionnées et que, de ce fait, des statistiques et/ou événements associé(e)s peuvent être affiché(e)s sur l'unité d'affichage, conformément à l'indication respective relative à une erreur.

13. Appareil d'essai suivant l'une des revendications précédentes,
**caractérisé en ce**
**qu'**une consigne de qualité comprend au moins deux paramètres d'essai.

14. Procédé destiné à réaliser un essai sur un réseau de télécommunications, comprenant les étapes suivantes :
- définition d'une multiplicité de consignes de qualité en fonction de résultats de comptage d'événements pour une multiplicité de paramètres d'essai ;
- réalisation de comptage d'événements concernant la multiplicité des paramètres d'essai pendant la réalisation d'un essai ;
- établissement d'une multiplicité de statistiques à partir des résultats des comptages ;
- comparaison de statistiques et de consignes de qualité correspondantes à partir de la multiplicité de statistiques et de consignes de qualité, un événement et/ou une statistique étant défini(e) par le biais de la non-satisfaction d'une consigne de qualité à titre d'erreur ;
- production d'un affichage sur une unité d'affichage,
**caractérisé en ce que**
l'affichage s'opère sur l'unité d'affichage, conformément aux résultats des comparaisons et que
les statistiques et/ou les événements, apparenté(e)s à une erreur, sont représenté(e)s sur l'unité d'affichage, aux fins de sélection.
